(19) Europäisches Patentamt
European Patent Office
Office européen des brevets

(11) **EP 2 357 647 B1**

(12) **EUROPÄISCHE PATENTSCHRIFT**

(45) Veröffentlichungstag und Bekanntmachung des Hinweises auf die Patenterteilung:
**02.01.2013 Patentblatt 2013/01**

(51) Int Cl.:
***G10L 15/14*** *(2006.01)*

(21) Anmeldenummer: **10150422.3**

(22) Anmeldetag: **11.01.2010**

(54) **Verfahren zur Spracherkennung**

Speech recognition method

Procédé destiné à la reconnaissance vocale

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**17.08.2011 Patentblatt 2011/33**

(73) Patentinhaber: **Svox AG**
**8048 Zürich (CH)**

(72) Erfinder:
• **Stemmer, Georg**
**81825 München (DE)**
• **Bauer, Josef G.**
**80797 München (DE)**

(74) Vertreter: **Stocker, Kurt**
**Büchel, von Révy & Partner**
**Zedernpark**
**Bronschhoferstrasse 31**
**9500 Wil (CH)**

(56) Entgegenhaltungen:
**EP-A1- 1 505 573      WO-A1-2009/010358**

• **GIULIA BERNARDIS HERV&VACUTE ET AL: "IMPROVING POSTERIOR BASED CONFIDENCE MEASURES IN HYBRID HMM/ANN SPEECH RECOGNITION SYSTEMS" 19981001, 1. Oktober 1998 (1998-10-01), Seite P318, XP007000216**

EP 2 357 647 B1

**Beschreibung**

Die vorliegende Erfindung betrifft ein Verfahren zur Spracherkennung an Äußerungen mit mehreren Äußerungsteilen bzw. Wörtern. Die Erfindung betrifft ferner eine Spracherkennungsvorrichtung, welche zur Durchführung eines entsprechenden Verfahrens geeignet ist sowie ein Computerprogrammprodukt, welches die Durchführung eines Spracherkennungsverfahrens auf einer programmgesteuerten Spracherkennungsvorrichtung veranlasst.

Verfahren zur Spracherkennung als Ergänzung für Mensch-Maschine-Schnittstellen finden immer breitere Anwendungsfelder. Die Befehlserkennung oder Auswahl von Einträgen aus Adressbüchern bei mobilen Endgeräten, wie beispielsweise Mobiltelefonen, ist mittlerweile ein Standardfunktionsumfang. Insbesondere auch bei Kraftfahrzeugen werden Spracherkennungssysteme eingesetzt, um z. B. Start- und Zielvorgaben für Navigationseinrichtungen zu erfassen.

Gebräuchliche Spracherkennungsverfahren basieren zum Beispiel auf sogenannten Hidden-Markov-Modellen, die eine sprecherunabhängige Spracherkennung ermöglichen und einen hohen Rechenaufwand bedingen. Da insbesondere bei Kraftfahrzeugen häufig sogenannte eingebettete Systeme bzw. Embedded Systems als Rechner zum Einsatz gelangen, welche nur begrenzte Rechen- und Speicherressourcen aufweisen, müssen häufig vereinfachte Spracherkennungen durchgeführt werden. Insbesondere die Einschränkung des Suchraums für die zu identifizierenden Suchbegriffe führt in der Regel zu geringeren Anforderungen an die Rechenleistung und Speicherkapazitäten. Allerdings geht eine entsprechende Suchraumeinschränkung und damit Ersparnis an Ressourcen häufig einher mit einer weniger zuverlässigen Spracherkennung und/oder einer weniger komfortablen Bedienung durch den Nutzer.

Wenn Äußerungen mit mehreren Äußerungsteilen bzw. Wörtern ermittelt werden sollen, beispielsweise Städtename, Straßenname, Hausnummer, so ergeben sich aufgrund der Länge der zu erkennenden Äußerung hohe Anforderungen an Speicher- und Rechenleistungen der entsprechenden Spracherkennungsvorrichtung. In der Vergangenheit wurden deshalb möglichst nur kurze Befehle oder Befehlssequenzen durch eine Spracherkennung erkannt und dem Nutzer dargestellt.

In der DE 102 07 895 A1 ist ein Verfahren zur Spracherkennung beschrieben, bei dem eine stufenweise Spracherkennung für die Eingabe von mehrteiligen Äußerungen bzw. Befehlen vorgeschlagen wird. Dort ist vorgesehen, beispielsweise bei der Eingabe eines Städtenamens und darauffolgender Eingabe eines Straßennamens zunächst eine Spracherkennung für eine Einzeläußerung mit dem gesprochenen Straßennamen vorzunehmen, welche dem Benutzer auf einem Display als Trefferliste angezeigt wird. Nach Quittierung durch den Benutzer kann dann ein auf den Städtenamen abgestimmtes zweites Vokabular für eine weitere Spracherkennung bestimmt werden, welches einen geringeren Speicherbedarf bedingt als die Kombination von Städtenamen und Straßennamen. Nachteilig ergibt sich jedoch, dass der Benutzer zunächst das Erkennungsergebnis für den Städtenamen registrieren muss und manuell eine Auswahl aus der Trefferliste vornehmen muss.

Aus der WO2009/010358 A1 ist es bekannt, eine vollständige Adresseingabe, welche den Städtenamen, den Straßennamen sowie eine Hausnummer umfasst, mittels einer Spracherkennung zu erkennen und dem Benutzer direkt eine Auswahl von kompletten Zieladressen anzuzeigen. Dabei wird zunächst in einem ersten Suchschritt eine Teilspracherkennung an einem ersten ausgewählten Äußerungsteil durchgeführt und in Abhängigkeit von einer durch die Teilspracherkennung erkannten Auswahl von Treffern für den ersten Äußerungsteil in einem zweiten Suchschritt eine Spracherkennung an dem ersten und weiteren Äußerungsteilen der Äußerung durchgeführt.

Für die Teilspracherkennung werden dem ersten Äußerungsteil mit einem Hidden-Markov-Modell HMM-Zustände zugeordnet. Die übrigen Äußerungsteile werden für die Teilspracherkennung mit Fülldaten überdeckt. Der zu erkennende erste Äußerungsteil mit einer bestimmten Anzahl von ersten erfassten Phonemen und mit Fülldaten wird im Rahmen eines Hidden-Markov-Modells mit bekannten Städtenamen einer Städtedatenbank verglichen. Im zweiten Spracherkennungsschritt, in dem die gesamte Äußerung einer Spracherkennung unterzogen wird, kann eine Hypothesendatenbank bzw. ein Vokabular verwendet werden, das nur zu einer Auswahl von Städten alle Adressdaten umfasst.

Der wesentliche Nachteil dieser Lösung besteht nun darin, dass die Äußerung in einen ersten Äußerungsteil und in weitere Äußerungsteile zerlegt werden muss, wobei der erste Äußerungsteil wirklich denjenigen Teil der Äußerung umfassen muss, der im ersten Suchschritt zu verwenden ist. Wenn beispielsweise bei der Eingabe einer Zieladresse gesagt wird "nach München ...", so umfasst der erste Äußerungsteil nicht den Namen der Stadt, sondern eben das Wort "nach". Im ersten Suchschritt werden dann Ortschaften gefunden, die nahe beim Wort "nach" liegen. Im zweiten Suchschritt wird zu diesen falschen Ortschaften ein Vokabular mit den dazugehörigen Adressen verwendet. Für den Benützer sind die dann dargestellten besten Übereinstimmungen nicht nachvollziehbar.

Es ist daher eine Aufgabe der vorliegenden Erfindung, ein verbessertes Verfahren zur Spracherkennung bereitzustellen.

Diese Aufgabe wird durch ein Verfahren zur Spracherkennung gemäß Patentanspruch 1 gelöst.

Im Rahmen der Erfindung wurde erkannt, dass im ersten Suchschritt die gesamte Äußerung verwendet werden soll. Dadurch kann auf eine Segmentierung der Äußerung verzichtet werden und die Gefahr der Auswahl eines falschen Segmentes für den ersten Suchschritt wird beseitigt. Anstelle der Wahl eines ersten Äußerungsteils, der die Information für den ersten Suchschritt aufweisen müsste, wird für den ersten Suchschritt ein erstes Vokabular verwendet, das zusätzlich zu den Elementen eines ersten Erkennungslexikons auch Kombinationen dieser Elemente mit Füllwörtern als Hypothesen umfasst.

Jede Hypothese des ersten Vokabulars umfasst somit ein Suchelement aus dem ersten Erkennungslexikon für den ersten Suchschritt. Zu den Hypothesen, die lediglich ein Suchelement umfassen, kommen Varianten mit Zusatzwörtern, die erfahrungsgemäß an bestimmten Stellen der Äußerung auftreten können. Zudem wird davon ausgegangen, dass die Information für den ersten Suchschritt sowohl im Anfangsbereich als auch im Endbereich der Äußerung stehen kann. Dieser Tatsache wird dadurch Rechnung getragen, dass im ersten Suchschritt vorzugsweise eine Vorwärtssuche und eine Rückwärtssuche durchgeführt wird. Die Hypothesen des ersten Vokabulars sind so aufgebaut, dass sie zumindest teilweise sowohl für die Vorwärtssuche als auch für die Rückwärtssuche verwendet werden können. Gegebenenfalls werden auch Teile des ersten Vokabulars nur für die Vorwärts- oder nur für die Rückwärtssuche verwendet. Die Hypothesen des ersten Vokabulars werden bei der Vorwärtssuche zeitlich in Vorwärtsrichtung vom Anfang der Äußerung her und bei der Rückwärtssuche zeitlich in Rückwärtsrichtung vom Ende der Äußerung her mit der Äußerung verglichen.

Beispielsweise kann eine Adressangabe den Ortsnamen im Anfangs- oder im Endbereich der Äußerung aufweisen. Bei Adressangaben soll es möglich sein, dass die Äußerung am Anfang "nach" oder "in", dann eine Ortschaft und anschließend "zur" und eine Straße mit Nummer umfasst. Es sollte ebenfalls möglich sein, dass die Äußerung mit "zur" und einer Straßenangabe beginnt, wobei dann die Ortschaft im Endbereich der Äußerung auftritt und eventuell ganz am Ende sogar noch ein Ländername steht.

Bei Adressen werden die Ortsnamen des ersten Erkennungslexikons mit Varianten ergänzt, die vor dem Städtenamen mögliche Füllwörter wie in und nach umfassen. Bei der Vorwärtssuche wird ein Füllwort oder das Suchelement am Anfang der Äußerung erwartet. Bei der Rückwärtssuche wird der Ortsname am Ende der Äußerung erwartet, wobei gegebenenfalls nach der Ortschaft noch das Land stehen könnte. Um mit der Rückwärtssuche auch Äußerungen mit einem am Ende stehenden Ländername erkennen zu können, werden ins erste Vokabular gegebenenfalls auch Varianten aufgenommen mit Ortsname und anschließend dem Name des entsprechenden Landes. Es versteht sich von selbst, dass anstelle des Landes oder zusätzlich zum Land auch die Bezeichnung einer Region, eines Bundeslandes, eines Bundesstaates oder eines Departements stehen kann. Die Ergänzung eines Ortsnamens mit übergeordneten Begriffen ist auch möglich, wenn der Ortsname im Anfangsbereich der Äußerung liegt, wobei dann diese Ergänzungen sowohl vor als auch nach dem Ortsname stehen können.

Bei der Vorwärtssuche erfolgt der Vergleich der Äußerung mit den Hypothese des ersten Vokabulars vom Anfang her. Bei der Rückwärtssuche wird das Suchelement, gegebenenfalls mit Füllwörtern, im Endbereich der Äußerung erwartet und der Vergleich der Äußerung mit den Hypothesen aus dem ersten Vokabular erfolgt vom Ende her.

Sowohl bei der Vorwärtssuche als auch bei der Rückwärtssuche wird nach Erreichen des Endes einer Hypothese des ersten Vokabulars eine Restkostenschätzung gemacht. Die Restkostenschätzung erzielt eine Vergleichbarkeit der Bewertungen. Zusammen mit der Restkostenschätzung können nämlich Bewertungen für die gesamte Äußerung berechnet werden, welche das Vorhandensein des jeweiligen Suchelements des ersten Vokabulars in der Äußerung bewerten.

Das Ergebnis des ersten Suchschritts ist eine Bewertung der Hypothesen des ersten Vokabulars bezüglich deren Übereinstimmung mit der Äußerung. In dieser Liste kommt gegebenenfalls ein Suchelement des ersten Erkennungslexikons mehr als einmal, bzw. in ausgewählten Hypothesen mit verschiedenen Füllelementen vor. Aus der sortierten Liste von Hypothesen wird eine n-best Liste der Suchelemente des ersten Erkennungslexikons erstellt. Vorzugsweise wird jedem ausgewählten Suchelement der n-best Liste auch die Information zugeordnet, ob es mit einer Vorwärtssuche oder einer Rückwärtssuche gefunden wurde.

Für den zweiten Suchschritt wird mit den ausgewählten Suchelementen der n-best Liste des ersten Suchschrittes und zugeordneten weiteren Suchelementen bzw. zugehörigen Zusatzinformationen ein zweites Erkennungslexikon erstellt. Bei Adressen werden somit die ausgewählten Ortschaften mit allen Adressen ins zweite Erkennungslexikon aufgenommen, wobei die weiteren Suchelemente bzw. Zusatzinformationen von den Straßen und Hausnummern der jeweiligen Ortschaft gebildet werden. Für den zweiten Suchschritt wird ein zweites Vokabular verwendet, das zusätzlich zu den Elementen des zweiten Erkennungslexikons auch Kombinationen dieser Elemente mit Füllwörtern umfasst. Die Füll- bzw. Zusatzwörter treten erfahrungsgemäß an bestimmten Stellen der Äußerung auf.

Wenn den ausgewählten Suchelementen der n-best Liste die Suchrichtung, mit der sie ausgewählt wurden, zugeordnet ist, so kann beim zweiten Suchschritt vorzugsweise ein zweites Vokabular nur mit der Anordnung der Suchbegriffe und der Füllwörter für die zugeordnete Suchrichtung erstellt werden. Wenn ein Hinweis auf die richtige Suchrichtung fehlt, so ist es zweckmäßig die Anordnung der Suchelemente und Füllwörter für beide Reihenfolgen der Suchelemente und Füllwörter ins zweite Vokabular aufzunehmen.

Im zweiten Suchschritt wird nun die Äußerung mit Hypothesen des zweiten Vokabulars verglichen. Das Ergebnis des zweiten Suchschritts ist eine nach einer Bewertung sortierte Liste von Hypothesen des zweiten Vokabulars. In dieser Liste kommt gegebenenfalls ein Suchelement des zweiten Erkennungslexikons mehr als einmal, nämlich mit verschiedenen Füllelementen vor. Aus der sortierten Liste von Hypothesen wird eine n-best Liste der Suchelemente des zweiten Erkennungslexikons erstellt. Mindestens ein Element dieser Liste wird zur Bestätigung angezeigt. Wenn mehrere Elemente angezeigt werden, so kann eine Auswahl getroffen werden.

Da in keinem Spracherkennungslauf alle möglichen Adressen gleichzeitig aktiv sind und im Speicher gehalten werden müssen, ermöglicht das beschriebene Verfahren die natürlich sprachige Adresseingabe auch auf "Embedded" Geräten mit geringen verfügbaren RAM-Speichern.

Gemäss der erfinderischen Lösung kann der Benutzer bei der gesprochenen Eingabe, die aus mindestens zwei Wörtern besteht, so natürlich wie möglich sprechen. Insbesondere ist er nicht gezwungen, die Elemente der Äußerung, insbesondere einer Adresse (Hausnummer, Straße, Ort, Land), in einer bestimmten, vom System festgelegten Reihenfolge zu sprechen. Unter Verwendung der möglichen Reihenfolgen der Wörter und der gängigen Füllwörter wird die Übereinstimmung der Äußerung bzw. Teilen davon mit Suchelementen von Hypothese-Varianten eines zweiten Vokabulars bewertet.

Obwohl die zu erkennende Äußerung mehrere verschiedene Äußerungsteile umfasst, wie beispielsweise eine Zieladresse mit Städtenamen, Straßennamen und Hausnummer, ist es nicht notwendig, dass der Nutzer bestimmte Äußerungsteile oder erkannte Äußerungsteile quittiert. Auch auf ein Auswählen eines Äu-βerungsteils aus der gesamten Äußerung für eine Teilspracherkennung mit einem kontextabhängigen kleineren Vokabular kann verzichtet werden. Damit geht auch eine geringere Anforderung an Speicher- und Rechenkapazität einher.

Nach dem Erfassen einer Äußerung wird an der Äußerung zuerst eine Satzendedetektion durchgeführt, die das Ende der Äußerung feststellt.

Anschließend wird im ersten Suchschritt zumindest ein Spracherkennungslauf durchgeführt, bei dem die Äußerung mit den Elementen einer Hypothesen-Sammlung bzw. des ersten Vokabulars verglichen wird. Dabei kann das erste Vokabular alle auf ein erstes Erkennungslexikon und zweckmäßige Füllwörter gestützten Varianten bereits enthalten oder es werden gegebenenfalls dynamisch Varianten erzeugt und diese mit der Äußerung vergleichen. Die Verarbeitungsschritte zum Auswerten einer Äußerung können z.T. auch gleichzeitig ablaufen und durch die Wiederverwendung von Zwischenergebnissen beschleunigt werden.

Der Vergleich erfolgt vorzugsweise mit einem Hidden-Markov-Modell (HMM) über das Vergleichen von Merkmalsvektoren der Äußerung mit HMM-Zuständen von Hypothesen des ersten Vokabulars. Beim Vergleichen wird nach dem Erreichen des Endes einer Hypothese des ersten Vokabulars für den Rest der Äußerung eine Restkostenschätzung, insbesondere eine heuristische Restkostenschätzung, verwendet. Vorzugsweise werden zwei Spracherkennungsläufe durchgeführt, nämlich eine Vorwärts- und eine Rückwärtssuche, wobei die Restkostenschätzung in beiden Suchrichtungen ans Ende des jeweiligen Hypothesen-Elementes anschließt.

Die Restkostenschätzung ermöglicht eine Bewertung für die gesamte Äußerung. Die Bewertung wird also auch unter Berücksichtigung von Abschnitten oder Wörtern der Äußerung (bei Adressen beispielsweise ein Straßenname) durchgeführt, die bei den Elementen des ersten Vokabulars über das Suchelement und ein gegebenenfalls eingesetztes Füllwort hinaus gehen.

Nur für die im ersten Suchschritt genügend hoch bewerteten Hypothesen bzw. Suchelemente (beispielsweise Ortsnamen) werden zugehörige Zusatzinformationen (beispielsweise Straßennamen und Hausnummern) abgerufen. Mit den im ersten Suchschritt genügend hoch bewerteten Suchelementen und den zugeordneten Zusatzinformationen wird vorzugsweise dynamisch ein zweites Vokabular erstellt, welches auch Varianten mit gängigen Füllwörtern und unterschiedlichen Reihenfolgen der Suchelemente, Zusatzinformationen und Füllwörter umfasst.

Bei Ausführungen zum Erkennen von Adressen werden für die im ersten Suchschritt genügend hoch bewerteten Ortsnamen alle Adressen mit den kompletten Adressangaben und mit Varianten, die gängige Füllwörter und/oder Adresszusätze (Land, Bundesland, Bundesstaat, Departement, Kanton, Region ...) umfassen, in das mindestens eine zweite Vokabular für den zweiten Suchschritt aufgenommen oder zumindest im zweiten Suchschritt dynamisch generiert. Dabei sind sowohl Varianten mit dem Ortsname im Anfangs- als auch solche mit dem Ortsname im Endbereich möglich, beispielsweise "Stadt Straße Hausnummer", "Stadt Straße", "Stadt" und "Straße Hausnummer Stadt" sowie "Straße Stadt" und "Stadt". Varianten mit den erwähnten optionalen Füllwörter wie z.B. in der Formulierung "in die Balanstraße" sowie mit fakultativen Adresszusätzen, wie Landesnamen, werden in das zweite Vokabular bzw. in die Erkennung einbezogen. Mit dem zweiten Vokabular wird der zweite Suchschritt auf der ganzen Äußerung durchgeführt.

Das Aufnehmen der Äußerung kann beispielsweise durch ein Mikrophon und einen nachgeschalteten Analog-/ Digitalwandler erfolgen, welcher die digitale Äußerung weiteren Recheneinheiten, beispielsweise einer CPU in einem Embedded System, bereitstellt. Das erste Vokabular wird z. B. durch eine Steuer- oder Recheneinrichtung, welche auf eine Datenbank mit Suchworten und entsprechenden Phonemtranskriptionen der Suchworte zugreift, erzeugt werden.

Übliche Spracherkennungsverfahren weisen hintereinandergeschaltete Schritte wie Feature- oder Merkmalsberechnung, E-missionsberechnung und Suche auf. Bei der Merkmalsberechnung wird das erfasste Audiosignal in Merkmale umgewandelt, beispielsweise MFCC-Merkmale. Diese in der Regel standardisierten Merkmale können für die eigentliche Spracherkennung aus dem Audiosignal extrahiert werden. MFCCs können z. B. berechnet werden, indem das erfasste Audiosignal bzw. die erfasste Äußerung zunächst in Blöcke oder Fenster unterteilt wird. An jedem Fenster wird dann eine Fourier-Transformation durchgeführt und ein Betragspektrum erzeugt. Das Betragspektrum wird gemäß der Mel-Skala verzerrt und logarithmisiert, um die menschliche Gehörwahrnehmung nachzubilden. Die in der Regel hohe Anzahl von entstehenden Frequenzbändern wird auf wenige, z. B. 40, zusammengefasst. Anschließend wird eine diskrete Kosinustransformation durchgeführt oder Hauptkomponenten-Analyse gemacht. Die Berechnung von MFCCs ist allgemein bekannt.

Mit einem Hidden-Markov-Modell kann man für die Hypothese L und eine Äußerung O eine Produktionswahrscheinlichkeit p(O|L) O berechnen. In der Spracherkennung besteht die Äußerung O dabei meist aus einer Folge von Merkmalvektoren o_1, o_2, o_3, ... o_T die aus kurzen, aufeinanderfolgenden Zeitabschnitten von circa 15-20 Millisekunden Dauer des aufgenommenen Sprachsignals berechnet werden. Die Umwandlung des Sprachsignals erfolgt durch diverse Verarbeitungsschritte wie Fourier-Transformation und Geräuschreduktion. Ein Merkmalvektor repräsentiert dabei die spektrale Zusammensetzung des kurzen Signalabschnitts aus dem er berechnet wurde. Die Anzahl T der Merkmalvektoren ist dabei variabel und hängt von der Länge der Äußerung ab.

Bei Anwendungen mit Adressen umfasst eine gesprochene Zieladresse den Städtenamen zusammen mit einem Straßennamen und anderen Wörtern. Die Hidden-Markov-Modelle der Hypothesen des ersten Vokabulars decken nicht die komplette Merkmalvektorfolge O = o_1, o_2, o_3, ..., o_T sondern nur einen Teilbereich ab, nämlich den Städtename und gegebenenfalls Füllwörter im Anfangsbereich O_s = o_1, ..., o_j oder den Städtename und gegebenenfalls Füllwörter im Endbereich O_e = o_k, ..., o_T . Für die beiden Teilbereiche können in der Vorwärts- bzw. Rückwärtssuche die Produktionswahrscheinlichkeiten P(O_s |L) bzw. P(O_e |L) berechnet werden, wobei j und k von der Länge der Hypothese abhängen.

Um dennoch die Produktionswahrscheinlichkeiten vergleichen zu können, benötigt man die Restkostenschätzung für den nicht benützten Bereich. Dazu wird beispielsweise in der Rückwärtssuche P(O | L) = P(O_1, O_2, ..., O_T | L ) durch den Term "RESTKOSTEN (o_1, o_2, ... o_(k-1)) * P( O_e | L)" angenähert. Die Restkostenschätzung dient dazu, die Produktionswahrscheinlichkeiten für Hypothesen unterschiedlicher Länge vergleichen zu können.

Die Größen k für die Rückwärtssuche und j für die Vorwärtssuche hängen von der jeweiligen Hypothese und von der Äußerung ab. Die Bestimmung von k bzw. j erfolgt jeweils zusammen mit der Bestimmung der n besten Hypothesen. Ein dazu einsetzbarer Algorithmus wird in der Literatur als sogenannter Beam Search oder Strahlsuchalgorithmus bezeichnet und ist ein heuristisches Suchverfahren, das für die Merkmalvektorfolge O und die Hypothese L einen optimalen Wert für k bestimmt. "Optimal" heißt hier: "die Lösung maximiert die angenäherte Produktionswahrscheinlichkeit RESTKOSTEN (o_I, o_2, ... o_(k-1)) * P( O_e | L)".

Die Restkosten hängen sowohl von k als auch von den effektiven Vektorkomponenten der Äußerung bis zum Index k ab bzw. sowohl von j als auch von den effektiven Vektorkomponenten der Äußerung ab dem Index j ab.

Die Hypothesen mit den Städtenamen können also unterschiedliche Bereiche der Äußerung A abdecken, z.B. bei einer Stadt "Ulm" wird der zugehörige Zeitabschnitt kürzer sein als für "Hildesheim". Damit auch bei dieser unterschiedlichen Länge eine Vergleichbarkeit gegeben ist, sind die Restkostenschätzungen sehr wichtig.

Eine Spracherkennungsvorrichtung mit der beschriebenen Funktionalität kann z.B. als ein Embedded System für eine Automobilanwendung z. B. für ein Navigationssystem ausgeführt sein. Die Steuereinrichtung ist beispielsweise ein Mikroprozessor oder eine CPU, welche vorzugsweise programmierbar ist und einen internen Speicher, zum Beispiel einen Pufferspeicher aufweist. Ferner ist eine Speichereinrichtung vorgesehen, welche z. B. einen RAM-Speicher und einen ROM-Speicher aufweist. Der ROM-Speicher kann z. B. das Betriebssystem oder Steuerprogramme für die CPU und Erkennungslexika aufweisen.

Im Spracherkennungsschritt werden die berechneten Merkmale, beispielsweise MFCCs, mit den durch das HMM erzeugte Vektoren verglichen. Daraus ergibt sich ein Abstand oder ein Maß für die Abweichung von den Zuständen im HMM. Dies wird auch als Emission oder Emissionswahrscheinlichkeit bezeichnet. Das zugrundeliegende Vokabular für die Spracherkennung weist Zustandsfolgen auf. Im letzten Suchschritt wird, um ein Erkennungsergebnis oder ein Treffer aus dem Vokabular bzw. den Suchwortschatz zu ermitteln, eine Suche auf Basis der Emissionen des Erkennungsvokabulars und gegebenenfalls einer Grammatik oder einem Sprachmodell durchgeführt. Es ist z. B. eine Baumsuche möglich, aber auch andere Suchalgorithmen denkbar, um im Vokabular des HMM-Modells die erfasste Äußerung bzw. den erfassten Äußerungsteil zu identifizieren.

Vorteilhafterweise wird bei einer Variante des erfindungsgemäßen Verfahrens zur Spracherkennung das erste Vokabular aus dem Speicher gelöscht, bevor das zweite Vokabular eingelesen wird. Es wird somit eine effiziente Speichernutzung insbesondere bei Embedded Systems gewährleistet.

Um die Ressourcen eines entsprechenden Spracherkennungssystems effizienter zu nutzen, sieht eine weitere Variante des Spracherkennungsverfahrens vor, dass beim ersten Suchschritt ermittelte Eigenschaften der Äußerung wiederverwendet werden. Insbesondere kommen berechnete MFCC-Merkmale und/oder Emissionswahrscheinlichkeiten in Frage. Eine Wiederverwendung in dem zweiten Spracherkennungsschritt reduziert damit den Rechenaufwand der Spracherkennung. Ebenso können Varianten oder Derivate der MFCCs verwendet werden.

Die Erfindung schafft ferner eine Spracherkennungsvorrichtung, welche vorzugsweise eine Steuereinrichtung und eine Speichereinrichtung aufweist, die an eine Datenbankeinrichtung gekoppelt sind. Dabei stellt die Datenbankeinrichtung Suchelemente von Erkennungslexika, Hypothesen eines Vokabulars und/oder eine phonemische Transkription der Suchworte, bzw. Elemente eines Modells, wie etwa HMM bereit. Die Datenbankeinrichtung kann z. B. als Wechseldatenträger ausgestaltet sein, wie z. B. eine DVD, SD-Speicherkarte, ein USB-Stick, eine CD-ROM oder weitere bekannte Speichermittel. Entsprechende Datenbanken für Navigationssysteme oder andere Spracherkennungsanwendungen werden z. B. in einem SAMPA-Format vertrieben. Dabei steht SAMPA für Speech Assessment Method Phonetic Alphabet. Dies entspricht einem phonetischen Alphabet, welches eine maschinenlesbare Codierung als ASCII-Symbole von phonetischen Alphabeten darstellt.

Ferner liefert die Erfindung ein Computerprogrammprodukt, welches die Durchführung eines vorgenannten Verfahrens zur Spracherkennung auf einer programmgesteuerten Spracherkennungsvorrichtung veranlasst. Dabei ist eine Realisierung des Computerprogrammprodukts beispielsweise in Form eines auf einem computerlesbaren Datenträger abgespeicherten Computerprogramms denkbar. Z. B. kommen CD-ROMs, DVDs, USB-Sticks, Speicherkarten oder weitere Speichermittel in Frage sowie auch die Bereitstellung als herunterladbare Datei von einem Server.

Weitere vorteilhafte Ausgestaltungen der Erfindung und Weiterbildungen sind Gegenstand der Unteransprüche sowie der im Folgenden beschriebenen Ausführungsbeispiele. Im Weiteren wird die Erfindung anhand von Ausführungsbeispielen unter Bezugnahme auf die beigelegten Figuren näher erläutert. Es zeigt dabei:

Figur 1 eine schematische Amplitudendarstellung einer Äußerung (Zeitachse horizontal, Amplitude vertikal);

Figur 2a eine schematische Darstellung der in einem ersten Suchschritt für eine Rückwärtssuche aus Füllwörtern und Ortsnamen erstellbaren Hypothesen eines ersten Vokabulars;

Figur 2b eine schematische Darstellung der in einem ersten Suchschritt mit einer Rückwärtssuche ermittelten n-best Liste zu den Hypothesen eines ersten Vokabulars;

Figur 3a eine schematische Darstellung der in einem ersten Suchschritt für eine Vorwärtssuche aus Füllwörtern und Ortsnamen erstellbaren Hypothesen eines ersten Vokabulars;

Figur 3b eine schematische Darstellung der in einem ersten Suchschritt mit einer Vorwärtssuche ermittelten n-best Liste zu den Hypothesen eines ersten Vokabulars;

Figur 4 eine schematische Darstellung einer Vorwärtssuche mit HMM Merkmalsvektorfolgen in einem ersten Suchschritt;

Figur 5 eine schematische Darstellung der in einem zweiten Suchschritt aus Füllwörtern und Ortsnamen erstellbaren Hypothesen eines zweiten Vokabulars; und

Figur 6 eine schematische Darstellung der in einem zweiten Suchschritt ermittelten n-best Liste zu den Hypothesen eines zweiten Vokabulars.

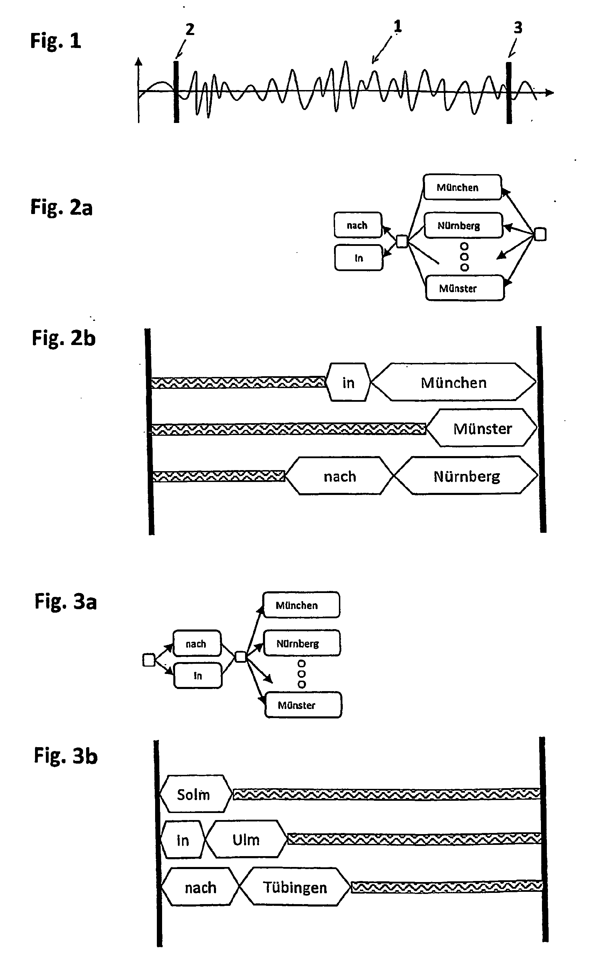

Die Figur 1 zeigt schematisch die Amplitude einer Äußerung 1, beispielsweise "zum Marienplatz in München", wobei horizontal die Zeitachse und vertikal die Amplitude dargestellt ist. Die Äußerung beginnt bei einem Startzeitpunkt 2. Mit einer Satzenddetektion wird ein Endzeitpunkt 3 bestimmt.

Fig. 2a zeigt für den ersten Suchschritt eine Grammatik zur Erkennung von Städtenamen mit Füllwörtern, wobei die Grammatik in Rückwärtsrichtung angewendet wird. Die dargestellte Grammatik zeigt, dass verschiedene Hypothesen mit Städtenamen aus einem ersten Erkennungslexikon und gängigen Füllwörtern von hinten mit der Äußerung verglichen werden. Dabei werden Produktionswahrscheinlichkeiten für alle möglichen Hypothesen berechnet, welche ab dem Ende der jeweiligen Hypothese bis zum Ende der Äußerung Restkosten berücksichtigen.

Fig. 2b zeigt zur oben beschriebenen Berechnung der Produktionswahrscheinlichkeiten drei Hypothesen einer n-best Liste.

Fig. 3a und 3b zeigen die von den Fig. 2a und 2b für die Rückwärtssuche beschriebene Grammatik und n-best Liste für eine Vorwärtssuche.

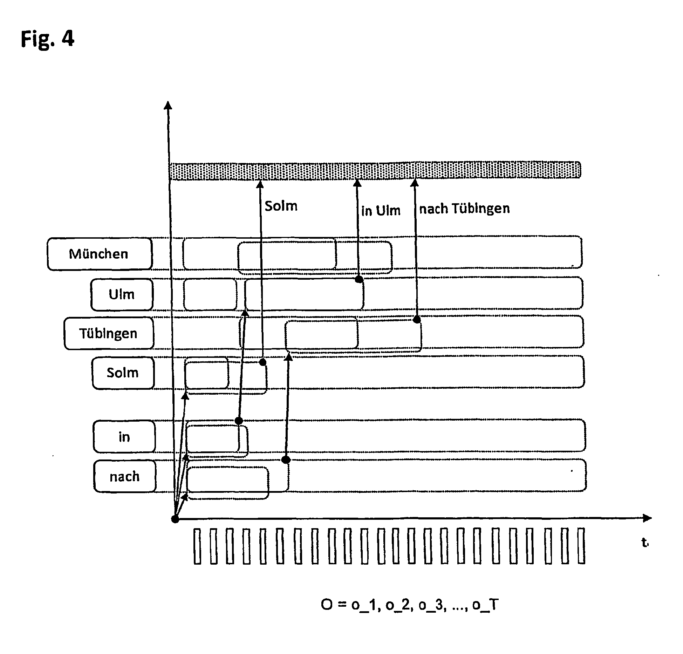

Fig. 4 zeigt einen Ablauf für den ersten Suchschritt bei der Verwendung von HMM Zuständen. Die Merkmalsvektoren der Äußerung werden in einer Vorwärtssuche mit den HMM Zuständen von Füllwörtern und anschließend mit den HMM Zuständen der Städtenamen eines ersten Erkennungslexikons verglichen, wobei ab dem Ende des jeweiligen Städtenamens im Vergleich mit dem Rest der Äußerung Restkosten bestimmt werden. Die berechneten Gesamtkosten bzw. die Produktionswahrscheinlichkeiten werden den verwendeten Hypothesen zugeordnet, um eine n-best Liste zu erstellen. Die mit Wörtern gefüllten Rechtecke stellen die HMM Zustände dieser Wörter dar. Die punktierten Rechtecke, die sich im Wesentlichen über die Länge eines Wortes erstrecken, stellen Bewertungen dieser Wörter aufgrund des Vergleichs mit den Merkmalsvektoren eines Abschnitts der Äußerung dar. Die Pfeile stellen von der Grammatik zugelassene Übergänge zu Wörtern oder am Schluss zur Restkostenschätzung dar. Für die jeweilige Hypothese werden die Restkosten vom letzten Pfeil bis zum Ende der Äußerung verwendet.

Anschließend werden Verfahrensschritte beschrieben, die bei einer Vorwärtssuche zur Bestimmung einer Liste von bestbewerteten Städtenamen für eine Äußerung beispielsweise durchgeführt werden können. Bei einer Rückwärtssuche sind die Verfahrensschritte analog.

Vorzugsweise wird ein kombiniertes Hidden-Markov-Modell (HMM) für das Vergleichen der Merkmalsvektoren der Äußerung mit den HMM-Zuständen der Hypothesen des ersten Vokabulars verwendet, wobei die HMM-Zustände Merkmalsvektorfolgen umfassen. Die HMM Zustände der Hypothesen werden aus den HMM Zuständen aller Wörter der jeweiligen Hypothese, bzw. aus den HMM Zuständen eines Suchelements des ersten Erkennungslexikons und den HMM Zuständen von Füllwörtern gebildet. Bei Adressen werden, wie in Fig. 4 beispielhaft dargestellt, die Einzel-HMM Zustände der Wörter "in", "nach", "Solm", "Tübingen", , "Ulm", "München", gemäß einer Erkennungsgrammatik zu einem kombinierten HMM Zustand zusammengestellt. Dieses kombinierte HMM hat einen Startzustand s_1, von dem dann in die HMM der einzelnen Wörter weiterverzweigt wird. Jeder Zustand des HMM hat einen oder mehrere Nachfolgerzustände. Das kombinierte HMM kann etwa gemäss der Grammatik in Fig. 2a bzw. 3a gebildet werden.

Jedes Wort ist durch ein HMM mit mehreren Zuständen repräsentiert. Es wird angenommen, dass die Merkmalvektorfolge der Äußerung $O = o\_1, ..., o\_T$ bereits vorliegt. Diese muss im ersten und im zweiten Suchschritt mit den Hypothesen des ersten bzw. zweiten Vokabulars verglichen werden. Zum Durchführen dieser Vergleiche wird vorzugsweise ein Strahlsuchalgorithmus eingesetzt, der anschließend anhand des ersten Suchschrittes erläutert wird. Beim zweiten Suchschritt wird vorzugsweise auf eine Restkostenabschätzung verzichtet, weil ja die bestbewerteten Hypothesen mit der gesamten Äußerung übereinstimmen sollten und nicht nur mit einem Teil.

Für den Strahlsuchalgorithmus enthält die Menge $B\_t$ alle zum Zeitpunkt t aktiven HMM-Zustände. Die Matrix $v(t,j)$ entspricht der Bewertungen aller Zustände j zum Zeitpunkt t. Die Liste WL enthält alle Teilypothesen mit Bewertung und Endzeitpunkt k.

Zuerst wird eine Initialisierung durchgeführt.

    a. Die Menge $B\_0$ wird mit dem Startzustand s_1 initialisiert.

    b. Die Liste WL ist leer.

    c. Die initiale Bewertung des Startzustands s_1 zum Zeitpunkt 0 ist 1.0: $v(0,1) := 1.0$ .

Anschließend werden für alle Zeitpunkte $t := 0, 1, ..., T$ folgende zum Teil bedingten Schritte durchgeführt:

Für alle HMM-Zustände $s\_i$ in der Menge $B\_t$

    i. Falls $s\_i$ der letzte Zustand eines Städtenamens ist, wird die Worthypothese mit dem Endzeitpunkt k=t, und der Bewertung $v(t,i)$ des Zustands $s\_i$ zum Zeitpunkt t in die Liste WL aller Worthypothesen eingetragen.

    ii. Falls t<T so wird für alle HMM-Zustände $s\_j$, die Nachfolger des Zustands $s\_i$ sind, folgendes durchgeführt:

        a. Berechnung der Bewertung v' des Zustands $s\_j$ für dem Merkmalvektor $o\_{(t+1)}$ unter Einbezug der Bewertung $v(t,i)$ des Zustands $s\_i$ zum Zeitpunkt t und dem Übergang von $s\_i$ nach $s\_j$:

$$v' ::= v(t,i) * P(O\_{(t+1)} | s\_j) * P(s\_j | s\_i)$$

        b. Falls v' innerhalb des Suchstrahls liegt (d.h. falls v' nicht eine globale Schwelle unterschreitet) und $s\_j$ noch nicht in $B\_{(t+1)}$ enthalten ist oder $v' > v(t+1,j)$ gilt, so wird

            1. $s\_j$ in $B\_{(t+1)}$ eingefügt, und
            2. $v(t+1,j) := v'$ gesetzt

Sobald die Suche abgeschlossen ist, werden für alle Worthypothesen mit Endzeitpunkt k und Bewertung v in der Liste der Worthypothesen WL die Restkosten R für alle nicht durch die Worthypothese abgedeckten Merkmalvektoren $o\_{k+1}, ..., o\_T$ aufmultipliziert:

$$v^{\circ} := v * R(o\_{(k+1)}) * R(o\_{(k+2)}) * ... * R(o\_T)$$

Die Restkosten R(o_t) für den Merkmalvektor o_t werden anhand einer heuristischen Funktion aus den HMM-Zuständen abgeleitet. Eine mögliche Definition der Restkosten R(o_t) ist die folgende:

Zu jedem Zeitpunkt t wird eine vorab heuristisch festgelegte Anzahl von Zuständen ermittelt, die von allen möglichen Zuständen s_j die höchste Bewertung P(o_t|s_j) haben. Diese Zustände bilden die Menge SRC_t. Die Anzahl |SRC-t| der Zustände in SRC_t kann z.B. 1 sein (SRC_t enthält nur den besten Zustand) oder 10 sein (die 10 besten Zustände). Dann können die Restkosten durch Mittelung der Bewertungen bestimmt werden:

$$R(o\_t) = PENALTY - \frac{1}{|SRC\_t|} \sum_{s\_j \in SRC\_t} \log\left(P(o\_t | s\_j)\right)$$

PENALTY ist dabei eine konstante, heuristisch gewählte, Strafe.

Durch die Restkostenschätzung erhalten alle Worthypothesen in der Liste WL unabhängig vom Endzeitpunkt k vergleichbare Bewertungen v°, da die neue Bewertung immer alle Merkmalvektoren der Äußerung enthält.

Nur die n bestwerteten Worthypothesen/ Städtenamen in der Liste WL werden weiter für die Bestimmung der Straßennamen und Hausnummern verwendet.

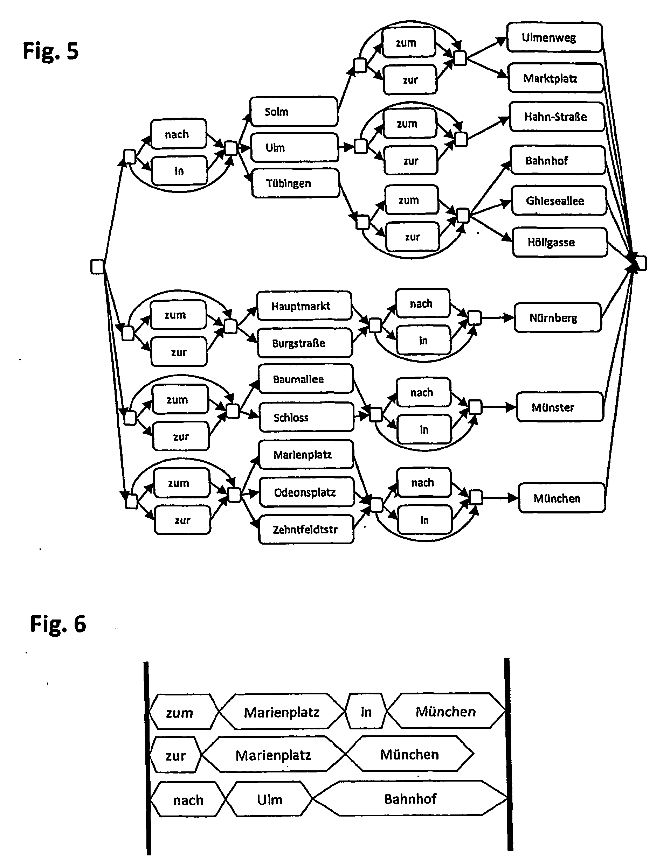

Obwohl die vorliegende Erfindung anhand bevorzugter Ausführungsbeispiele und Varianten des Spracherkennungsverfahrens erläutert wurde, ist sie nicht darauf beschränkt, sondern vielfältig modifizierbar. Die vorbeschriebenen Beispiele anhand einer Zieleingabe für ein Navigationssystem ist abwandelbar. Zumindest immer dann, wenn eine mehrere Äußerungsteile umfassende Äußerung hierarchisch organisiert ist, d. h., wenn beispielsweise ein erster Äußerungsteil ein Oberbegriff für weitere Äußerungsteile darstellt kann die Erfindung eine Spracherkennung verbessern. Insofern lässt sich der in der Figur 5 dargestellte Verzweigungsbaum auf vielerlei Anwendungen beziehen, wie z. B. die erwähnte Suche von Musikstücken bei einem Musikabspielgerät, wobei als Oberbegriff z. B. der Interpret, als weiterer Begriff das Album und schließlich die Tracknummer oder Songnummer verwendet werden kann. Auch die Anzahl der Äußerungsteile und deren Anordnung in der Äußerung sind abwandelbar. Der erste zu erkennende Äußerungsteil kann z. B. auch am Ende der Gesamtäußerung vorliegen.

Fig. 5 zeigt die Grammatik für die im zweiten Suchschritt aus Füllwörtern und Ortsnamen erstellbaren Hypothesen des zweiten Vokabulars mit Adressen der im ersten Suchschritt ausgewählten Orte. Dabei werden sowohl Hypothesen mit dem Ortsnamen im Anfangsbereich als auch solche mit dem Ortsnamen im Endbereich aufgeführt. Es versteht sich von selbst, dass auch noch weitere Möglichkeiten gegeben sind, beispielsweise wenn auch noch Ländernamen eingesetzt sein können. Falls aus dem ersten Suchschritt für die ausgewählten n-best Ortsnamen die Suchrichtung festgehalten ist, kann die Grammatik mit dieser Information eingeschränkt werden, indem bei einem in der Vorwärtssuche gefundenen Ortsname nur Hypothesen mit dem Ortsname im Anfangsbereich verwendet werden.

Fig. 6 zeigt eine schematische Darstellung der in einem zweiten Suchschritt ermittelten n-best Liste zu den Hypothesen eines zweiten Vokabulars.

**Patentansprüche**

1. Verfahren zur Spracherkennung einer Äußerung, welche mindestens zwei zu erkennende Wörter umfasst, mit einem ersten Suchschritt mit dem der Äußerung aus einem ersten Erkennungslexikon mindestens ein bestbewertetes Suchelement zugeordnet wird, wobei das erste Erkennungslexikon Suchelemente für einen Teil der Äußerung umfasst, und einem zweiten Suchschritt mit dem der Äußerung aus einem zweiten Erkennungslexikon mindestens ein bestbewertetes Suchelement zugeordnet wird, wobei das zweite Erkennungslexikon mindestens eines der bestbewerteten Suchelemente des ersten Suchschritts zusammen mit dessen zugeordneten weiteren Suchelementen umfasst, so dass die Suchelemente des zweiten Erkennungslexikons mindestens mit zwei Teilen der Äußerung eine Übereinstimmung erzielen können, **dadurch gekennzeichnet, dass** im ersten Suchschritt mit den Suchelementen des ersten Erkennungslexikons und mit Füllwörtern Hypothesen eines ersten Vokabulars gebildet werden und aus diesen anhand von zu den Hypothesen des ersten Vokabulars berechneten Produktionswahrscheinlichkeiten für die gesamte Äußerung mindestens eine bestbewertete Hypothese bestimmt wird, wobei zum Berechnen der Produktionswahrscheinlichkeiten für den über die jeweilige Hypothese hinausgehenden Teil der Äußerung Restkostenschätzungen verwendet werden.

2. Verfahren nach Anspruch 1, **dadurch gekennzeichnet, dass** der erste Suchschritt eine Vorwärtssuche und eine Rückwärtssuche umfasst, wobei Hypothesen des ersten Vokabulars bei der Vorwärtssuche zeitlich in Vorwärtsrichtung vom Anfang der Äußerung her und bei der Rückwärtssuche zeitlich in Rückwärtsrichtung vom Ende der Äußerung her mit der Äußerung verglichen werden.

3. Verfahren nach Anspruch 1 oder 2, **dadurch gekennzeichnet, dass** für den zweiten Suchschritt mit den Suchelementen des zweiten Erkennungslexikons und mit Füllwörtern Hypothesen eines zweiten Vokabulars gebildet werden und aus diesen anhand von zu den Hypothesen des zweiten Vokabulars berechneten Produktionswahrscheinlichkeiten für die gesamte Äußerung mindestens eine bestbewertete Hypothese bestimmt wird, wobei die Suchelemente des zweiten Erkennungslexikons aus mindesten zwei Teilen, nämlich einem Suchelement des ersten Suchschritts und einem zugeordneten weiteren Suchelement bestehen, welche Teile in beiden möglichen Reihenfolgen und auch mit Füllwörtern zu Hypothesen des zweiten Vokabulars kombiniert werden.

4. Verfahren nach einem der Ansprüche 1 bis 3, **dadurch gekennzeichnet, dass** beim ersten und beim zweiten Suchschritt zum Vergleichen der Hypothesen mit der Äußerung Zustandsfolgen eines Hidden-Markov-Modells verwendet werden.

5. Verfahren nach Anspruch 4, **dadurch gekennzeichnet, dass** im ersten Suchschritt und im zweiten Suchschritt ein Strahlsuchalgorithmus eingesetzt wird.

6. Verfahren nach einem der Ansprüche 1 bis 3, **dadurch gekennzeichnet, dass** das mindestens eine bestbewertete Suchelement des zweiten Suchschritts zur Bestätigung vorgelegt wird.

7. Spracherkennungsvorrichtung, welche derart ausgestaltet ist, dass ein Verfahren nach einem der Ansprüche 1 bis 6 ausgeführt wird.

8. Spracherkennungsvorrichtung nach Anspruch 7, wobei die Spracherkennungsvorrichtung als ein Embedded System, vorzugsweise für den Automotivebereich, insbesondere als Teil eines Navigationssystems, ausgeführt ist.

9. Spracherkennungsvorrichtung nach Anspruch 7, wobei die Spracherkennungsvorrichtung als Teil eines Mobiltelefons und/oder einer Audiowiedergabeeinrichtung, insbesondere eines MP3-Players, ausgestaltet ist.

10. Kraftfahrzeug, insbesondere ein Automobil, welches eine Spracherkennungsvorrichtung nach einem der Ansprüche 7 bis 9 aufweist.

11. Computerprogrammprodukt, welches die Durchführung eines Verfahrens nach einem der Ansprüche 1 bis 7 auf einer programmgesteuerten Spracherkennungsvorrichtung veranlasst.

**Claims**

1. A method for speech recognition of an utterance, which includes at least two words to be recognised, comprising a first searching step, by which at least one top-rated searching element, from a first recognition lexicon, is associated to the utterance, said first recognition lexicon including searching elements for part of the utterance, and a second searching step, by which at least one top-rated searching element, from a second recognition lexicon, is associated to the utterance, said second recognition lexicon including at least one of the top-rated searching elements of the first searching step together with its associated further searching elements, so that the searching elements of the second recognition lexicon are able to achieve compliance with at least two parts of the utterance, **characterised in that** hypotheses of a first vocabulary are formed in the first searching step by the searching elements of the first recognition lexicon and by filling words, and from these at least one top-rated hypothesis is determined on the basis of production probabilities for the entire utterance calculated to the hypotheses of the first vocabulary, wherein residual costs estimations are used for calculating the production probabilities for that part of the utterance, which goes beyond the respective hypothesis.

2. Method according to claim 1, **characterised in that** the first searching step comprises a forward search and a rearward search, wherein hypotheses of the first vocabulary are chronologically compared with the utterance during the forward search in forward direction from the beginning of the utterance on, and during the rearward search from the end of the utterance on.

**3.** Method according to claim 1 or 2, **characterised in that** hypotheses of a second vocabulary are formed for the second searching step by the searching elements of the second recognition lexicon and by filling words, and from these at least one top-rated hypothesis is determined on the basis of production probabilities for the entire utterance calculated to the hypotheses of the second vocabulary, wherein the searching elements of the second recognition lexicon consist of at least two parts, that is to say of a searching element of the first searching step and of an associated further searching element, said parts being combined to hypotheses of the second vocabulary in the two possible orders and also with filling words.

**4.** Method according to any of claims 1 to 3, **characterised in that** state transitions of a hidden Markov model are used during the first and second searching step for comparing the hypotheses with the utterance.

**5.** Method according to claim 4, **characterised in that** a beam search algorithm is used in he first searching step and in the second searching step.

**6.** Method according to any of claims 1 to 3, **characterised in that** the at least one top-rated searching element of the second searching step is presented for confirmation.

**7.** A speech recognition device designed in such a manner, that a method according to any of claims 1 to 6 is performed.

**8.** Speech recognition device according to claim 7, wherein the speech recognition device is designed as an embedded system, preferably for the automotive field, particularly as part of a navigation system.

**9.** Speech recognition device according to claim 7, wherein the speech recognition device is designed as part of a mobile phone and/or of audio-reproducing device, particularly of a MP3 player.

**10.** A motor vehicle, particularly a car, which comprises a speech recognition device according to any of claims 7 to 9.

**11.** A computer program product, which arranges the implementation of a method according to any of claims 1 to 7 on a program controlled speech recognition device.


**Revendications**

**1.** Procédé destiné à la reconnaissance vocale d'un énoncé incluant au moins deux mots à reconnaître, comprenant une première étape de recherche, par laquelle on attribue au moins un élément mieux noté de recherche à l'énoncé à partir d'un premier lexique de reconnaissance, ledit premier lexique de reconnaissance comprenant des éléments de recherche pour une partie de l'énoncé, une deuxième étape de recherche, par laquelle on attribue au moins un élément mieux noté de recherche à l'énoncé à partir d'un deuxième lexique de reconnaissance, dans lequel le deuxième lexique de reconnaissance comprend au moins un des éléments mieux notés de recherche de la première étape conjointement avec les autres élément de recherche attribués à celui-ci, de manière que les éléments du deuxième lexique de reconnaissance sont capable à réaliser une concordance avec au moins deux parties de l'énoncé, **caractérisé en ce, que** dans la première étape de recherche on forme des hypothèses d'un premier vocabulaire avec les éléments de recherche du premier lexique de reconnaissance et avec des mots de remplissage, et à partir de ceux-ci on détermine au moins une hypothèse mieux notée pour l'énoncé entier à la base des probabilités de production calculées aux hypothèses du premier vocabulaire, dans lequel des estimations de coûts résiduels sont utilisées pour calculer les probabilités de production pour la partie dépassant la hypothèse respective de l'énoncé.

**2.** Procédé selon la revendication 1, **caractérisé en ce, que** la première étape de recherche comprend une recherche en avant et une recherche en arrière, dans lequel les hypothèses du premier vocabulaire sont comparées, lors de la recherche en avant, dans le temps en direction avant à partir du commencement de l'énoncé, et lors de la recherche en arrière dans le temps en direction arrière à partir du fin de l'énoncé.

**3.** Procédé selon la revendication 1 ou 2, **caractérisé en ce, que** pour la deuxième étape de recherche on forme des hypothèses d'un deuxième vocabulaire avec les éléments de recherche du deuxième lexique de reconnaissance et avec des mots de remplissage, et à partir de ceux-ci on détermine au moins une hypothèse mieux notée pour l'énoncé entier à la base des probabilités de production calculées aux hypothèses du deuxième vocabulaire, dans lequel les éléments de recherche du deuxième lexique de reconnaissance consistent d'au moins deux parties, à savoir un élément de recherche de la première étape et un autre élément de recherche associé, lesdites parties étant combinées aux deux ordres possibles et aussi avec les mots de remplissage à former les hypothèses du deuxième vocabulaire.

4. Procédé selon une quelconque des revendications 1 à 3, **caractérisé en ce, que** pour comparer les hypothèses avec l'énoncé lors de la première et la deuxième étape on utilise des séquences d'un Hidden-Markov-Modèle.

5. Procédé selon la revendication 4, **caractérisé en ce, qu'**un algorithme de recherche de faisceaux est utilisé lors de la première étape et lors de la deuxième étape.

6. Procédé selon une quelconque des revendications 1 à 3, **caractérisé en ce, que** l'au moins un élément de recherche mieux noté de la deuxième étape de recherche est présenté pour une confirmation.

7. Dispositif destiné à la reconnaissance vocale, arrangé de manière, qu'un procédé selon une quelconque des revendications 1 à 6 est accompli.

8. Dispositif destiné à la reconnaissance vocale selon la revendication 7, dans lequel le dispositif destiné à la reconnaissance vocale est réalisé comme un système embarqué, de préférence pour le champ automobile, particulièrement comme part d'un système de navigation.

9. Dispositif destiné à la reconnaissance vocale selon la revendication 7, dans lequel le dispositif destiné à la reconnaissance vocale est réalisé comme une partie d'un téléphone mobile et/ou d'un dispositif de reproduction audio, particulièrement d'un lecteur MP3.

10. Véhicule à moteur, particulièrement automobile, qui comprend un dispositif destiné à la reconnaissance vocale selon une quelconque des revendications 7 à 9.

11. Produit de programme d'ordinateur, qui cause l'exécution d'un procédé selon une quelconque des revendications 1 à 7 sur un dispositif destiné à la reconnaissance vocale dirigé par un programme.

**Fig. 1**

**Fig. 2a**

**Fig. 2b**

**Fig. 3a**

**Fig. 3b**

# Fig. 4

Solm   In Ulm   nach Tübingen

München

Ulm

Tübingen

Solm

in

nach

t

O = o_1, o_2, o_3, ..., o_T

**Fig. 5**

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10207895 A1
- WO 2009010358 A1